# FASCICULE DE BREVET EUROPEEN

(11) **EP 2 341 366 B1**
(45) Date de publication et mention de la délivrance du brevet: **15.05.2013**
(21) Numéro de dépôt: 10196623.2
(22) Date de dépôt: 22.12.2010
(51) Int. Cl.: G01S 13/78, H03G 3/30

(54) **Dispositif de détection de signaux impulsionnels comprenant une fonction de détection d'emmêlement d'impulsions**
Vorrichtung zum Erfassen von Impulssignalen, die eine Erfassungsfunktion von einem Garbling von Impulsen umfasst
Device for detecting impulse signals including a function for detecting signal garbling

(30) Priorité: 23.12.2009 FR 0906279
(43) Date de publication de la demande: 06.07.2011
(73) Titulaire: Thales, 92200 Neuilly Sur Seine (FR)
(72) Inventeur: Boulanger, Emilie, 92700 Colombes (FR); Letellier, Frankie, 92700 Colombes (FR)
(74) Mandataire: Collet, Alain

(56) Documents cités:
- EP-A1- 0 560 658
- WO-A1-98/37629
- WO-A1-2005/085898
- US-A- 5 387 915

## Description

La présente invention concerne un dispositif de détection de signaux impulsionnels comprenant une fonction de détection d'emmêlement d'impulsions. Elle peut s'appliquer plus particulièrement au domaine des systèmes de radars secondaires, notamment utilisés dans des systèmes de détection et d'identification d'aéronefs, et plus précisément des chaînes de détection utilisées dans ces systèmes. Plus généralement, la présente invention s'applique à des chaînes de réception de signaux impulsionnels ou de séquences d'impulsions non modulées en phase.

Les radars secondaires, communément désignés par le sigle SSR correspondant à la terminologie anglaise de "Secondary Surveillance Radar" sont largement utilisés dans le domaine de la détection de cibles aériennes. Des radars secondaires équipent typiquement des plateformes terrestres fixes, et sont souvent couplés à des radars primaires. Des radars secondaires peuvent également équiper des plateformes terrestres ou aériennes mobiles. Les radars secondaires peuvent également être désignés selon le sigle IFF, correspondant à la terminologie anglaise de "Identification Friend or Foe", ou identification d'amis ou d'ennemis. L'IFF, initialement conçue pour la discrimination entre des cibles amies ou ennemies, est désormais déclinée dans une pluralité de modes, utilisés notamment dans l'aéronautique civile, pour la détection d'aéronefs équipés de transpondeurs. Les transpondeurs équipant les aéronefs émettent des signaux de façon spontanée sur une base périodique, ou en réponse à des signaux d'interrogation spécifiques émis par des radars secondaires ou interrogateurs. Les radars secondaires ou interrogateurs captent les signaux émis par les transpondeurs. Une spécificité de signaux émis par les transpondeurs, dits SIF selon l'acronyme correspondant à la terminologie anglaise "Selective Identification Feature", est que ceux-ci se présentent sous la forme de trains d'impulsions, non modulées en phase. Un certain nombre d'impulsions sont émises, habituellement délimitées par deux impulsions dites "d'encadrement" prévues à cet effet, communément désignées selon le terme anglais "brackets" : l'absence ou la présence d'impulsions dans des messages de durée déterminée, constitue un mot logique contenant certaines informations propres à l'aéronef, telles que son identification, son altitude, etc. Par exemple, il est possible de citer le mode A, dans lequel le transpondeur d'un aéronef transmet un code d'identification SSR, le code permettant notamment d'associer, dans un système de poursuite radar, l'identification d'un aéronef à un plot radar. On peut également citer le mode C, dans lequel une information d'altitude est ajoutée, l'information pouvant par exemple être affichée sur un écran de contrôle d'un centre de contrôle du trafic aérien, en association avec le plot radar correspondant à l'aéronef. Dans la plupart des modes considérés, un transpondeur émet un message constitué d'une séquence définie par une pluralité d'impulsions, les impulsions étant émises à une fréquence caractéristique non modulée. La chaîne de détection du radar secondaire opère alors un décodage des mots lui parvenant sous cette forme, en détectant l'absence ou la présence des impulsions comprises entre les impulsions de type "brackets", délimitant les mots.

Cependant, la détection peut parfois être délicate, notamment lorsque plusieurs cibles évoluent dans la portée du radar secondaire. Dans de tels cas, il peut se produire des phénomènes d'entrelacement des impulsions, voire d'emmêlement de celles-ci. Il est à noter que l'entrelacement d'impulsions a lieu lorsque les impulsions en provenance de deux cibles s'intercalent les unes avec les autres, c'est-à-dire lorsqu'il n'existe pas de créneau temporel de coïncidence d'impulsions en provenance des deux cibles, alors que l'emmêlement se produit lorsque sur au moins une période de temps, les impulsions en provenance des deux cibles coïncident. L'emmêlement de réponses peut notamment conduire à un mauvais décodage des réponses, et à une interprétation erronée pouvant avoir des conséquences sérieuses. L'augmentation incessante du trafic aérien entraîne une augmentation des cas d'emmêlement de réponses de type SIF. Il est habituel d'utiliser, dans les chaînes de détection de radars secondaires, des amplificateurs logarithmiques : ces amplificateurs permettent notamment de couvrir de grandes dynamiques des signaux d'entrée.

Parmi les solutions techniques connues de l'état de la technique, il existe par exemple des méthodes consistant à exploiter le signal issu d'une sortie de l'amplificateur logarithmique, dite sortie RSSI ou encore sortie "vidéo", le sigle RSSI désignant l'expression anglaise "Received Signal Strength Intensity" ou intensité de la puissance du signal reçu. La sortie RSSI restitue un signal de type enveloppe, représentatif du niveau de réception. La sortie RSSI de l'amplificateur logarithmique peut alors être reliée à un convertisseur analogique - numérique de grande résolution, pour permettre un traitement numérique des données. Ainsi, il existe des méthodes connues de détection d'emmêlement de réponses, basées sur l'utilisation de l'enveloppe des impulsions. Dans le cas où un emmêlement d'impulsions est détecté, la réponse peut être considérée comme douteuse, et l'écho correspondant peut par exemple ne pas être pris en compte dans la génération des plots IFF, un plot IFF correspondant à l'association de plusieurs réponses IFF reçues de la même cible, partant de même code.

Cependant, dans certains cas, l'emmêlement ne provoque qu'une faible variation de l'enveloppe du signal, rendant ainsi difficile la détection de l'emmêlement. Ces cas se présentent en particulier lorsque les niveaux de puissance reçus de différentes cibles sont proches.

D'autres solutions techniques consistent à analyser la durée des impulsions détectées via le signal RSSI, en se basant sur les fronts montants et descendants du signal. Des impulsions anormalement longues peuvent alors suggérer la présence de phénomènes d'emmêlement. Cependant des phénomènes tels que les perturbations atmosphériques par exemple, peuvent engendrer un étirement de la forme des impulsions, même en l'absence de phénomènes d'emmêlement.

La demande de brevet publiée sous la référence EP 0560658 décrit un procédé et un dispositif de détection d'impulsions reçues par un radar secondaire par analyse de phase.

Le brevet publié sous la référence US 5,387,915 décrit une méthode et un dispositif pour détecter et décoder des signaux d'un transpondeur.

La demande de brevet publiée sous la référence WO 2005/085898 décrit une méthode de décodage de signaux de radars secondaires.

Un but de la présente invention est de pallier au moins les inconvénients précités, en proposant un dispositif de détection de signaux impulsionnels comprenant une fonction de détection de l'emmêlement des impulsions, capable de diagnostiquer un phénomène d'emmêlement même dans des cas où l'emmêlement est causé par des niveaux de puissance relativement proches reçus en provenance de différentes cibles, et partant permettant de limiter le nombre de faux plots et/ou de codes erronés relevés par des dispositifs interrogateurs IFF.

Un avantage de l'invention est qu'elle peut être aisément mise en oeuvre dans des dispositifs déjà connus de détection de signaux impulsionnels.

A cet effet, l'invention a pour objet un dispositif pour radar secondaire de détection de signaux impulsionnels non modulés en phase ou de séquences d'impulsions d'une fréquence déterminée comprenant des moyens de détection d'emmêlement d'impulsions, au moins un amplificateur recevant un signal radiofréquence, et restituant au moins un premier signal représentatif de l'enveloppe du signal d'entrée, et un second signal normalisé, caractérisé en ce qu'un module d'estimation de saut de phase comprend des moyens d'estimation de la phase du signal radiofréquence mesurant l'écart de phase entre ledit second signal normalisé et un signal périodique de référence, des moyens pour évaluer un saut de phase, la présence d'emmêlement d'impulsions étant détectée si le saut de phase est d'une valeur supérieure à une valeur seuil déterminée.

Dans un mode de réalisation de l'invention, le dispositif de détection de signaux peut être caractérisé en ce que l'amplificateur est un amplificateur logarithmique.

Dans un mode de réalisation de l'invention, le dispositif de détection de signaux peut être caractérisé en ce que les moyens d'estimation de la phase du signal radiofréquence sont mis en oeuvre par un module de prétraitement transposant le signal normalisé en bande de base, un démodulateur décomposant le signal normalisé en composantes en phase et quadrature, les composantes étant filtrées par des filtres passe-bas de fréquences de coupure supérieures à la fréquence déterminée des séquences d'impulsions, un module d'estimation de phase déterminant alors la valeur de la phase du signal radiofréquence égale à l'arc-tangente du rapport entre les composantes de quadrature et en phase arctan(Q/I), un module d'analyse détectant la présence d'un saut de phase.

Dans un mode de réalisation de l'invention, le dispositif de détection de signaux peut être caractérisé en ce que les module de prétraitement, démodulateur, filtres passe-bas, module d'estimation de phase et module d'analyse réalisent des traitements numériques, après conversion des signaux analogiques par un convertisseur analogique - numérique.

Dans un mode de réalisation de l'invention, le dispositif de détection de signaux peut être caractérisé en ce que le module d'analyse restitue un signal de type booléen représentatif de la présence d'un phénomène d'emmêlement d'impulsions, lorsque la valeur absolue de la différence entre les valeurs de la phase à un instant d'échantillonnage donné, et de la phase à l'instant d'échantillonnage précédent, excède une valeur seuil déterminée.

Dans un mode de réalisation de l'invention, le dispositif de détection de signaux peut être caractérisé en ce que le module de détection d'impulsion restitue un signal de type booléen de suspicion d'un phénomène d'emmêlement d'impulsions, un module de décodage de réponse recevant ledit signal de suspicion d'un phénomène d'emmêlement d'impulsions, et le signal de type booléen représentatif de la présence d'un phénomène d'emmêlement d'impulsions issu du module d'analyse, et restituant un signal consolidé de type booléen, représentatif de la présence d'un phénomène d'emmêlement d'impulsions, ledit signal consolidé résultant d'une opération logique de type "OU".

Dans un mode de réalisation de l'invention, le dispositif de détection de signaux peut être caractérisé en ce que la détection de la présence d'un saut de phase réalisée par le module d'analyse, est opérée pendant une fenêtre de durée déterminée débutant de manière simultanée avec le début d'une impulsion détectée par le module de détection d'impulsion.

Dans un mode de réalisation de l'invention, le dispositif de détection de signaux peut être caractérisé en ce que la détection de la présence d'un saut de phase réalisée par le module d'analyse, est opérée pendant la durée de détection d'une impulsion par le module de détection d'impulsion.

Dans un mode de réalisation de l'invention, le dispositif de détection de signaux peut être caractérisé en ce que le module de décodage de réponse reçoit également un signal représentatif de la présence d'impulsion, délivré par le module de détection d'impulsion, et procède au décodage des séquences d'impulsions reçues, le module de décodage de réponse restituant au moins ledit signal consolidé de type booléen, représentatif de la présence d'un phénomène d'emmêlement d'impulsions, et les informations issues du décodage des séquences d'impulsions, l'ensemble des signaux étant appliqués en entrée d'un module d'association discriminant les informations décodées associées à un phénomène d'emmêlement d'impulsions diagnostiqué par le module de décodage de réponse.

Dans un mode de réalisation de l'invention, le dispositif de détection de signaux peut être caractérisé en ce que le module de décodage de réponse reçoit également un signal représentatif de la présence d'impulsion, délivré par le module de détection d'impulsion, et procède au décodage des séquences d'impulsions reçues, le module de décodage de réponse restituant au moins ledit signal consolidé de type booléen, représentatif de la présence d'un phénomène d'emmêlement d'impulsions, et les informations issues du décodage des séquences d'impulsions, l'ensemble des signaux étant appliqués en entrée d'un module d'association attribuant aux informations décodées associées à un phénomène d'emmêlement d'impulsions diagnostiqué par le module de décodage de réponse, un niveau de confiance supérieur à une valeur déterminée.

D'autres caractéristiques et avantages de l'invention apparaîtront à la lecture de la description, donnée à titre d'exemple, faite en regard des dessins annexés qui représentent :
- la figure 1, le schéma de principe d'une chaîne de détection de signaux impulsionnels connue de l'état de la technique ;
- la figure 2, le schéma de principe d'une chaîne de détection de signaux impulsionnels selon un mode de réalisation de la présente invention ;
- la figure 3, le schéma de principe d'une chaîne de traitement associée à un dispositif de détection de signaux impulsionnels, selon un mode de réalisation de l'invention ;
- les figures 4a et 4b, respectivement une courbe illustrant l'évolution temporelle d'un signal représentatif de l'amplitude du signal reçu par un dispositif de détection, et d'un signal représentatif de la phase du signal reçu, selon un mode de réalisation de l'invention ;
- la figure 5, le schéma de principe global d'un dispositif de détection de signaux impulsionnels comprenant une fonction de détection d'emmêlement d'impulsions, selon un mode de réalisation de l'invention.

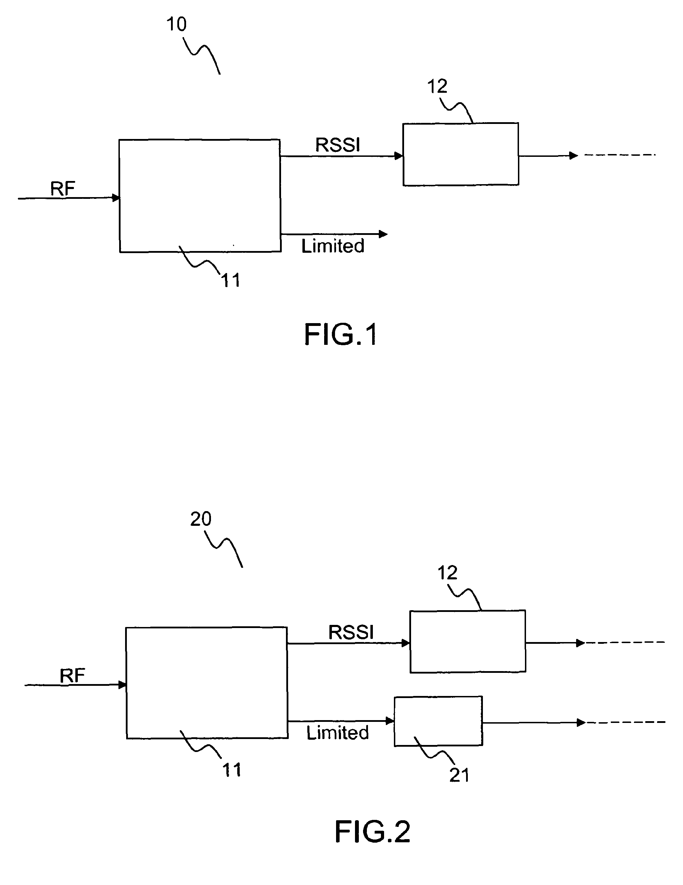

La figure 1 présente le schéma de principe d'une chaîne de détection de signaux impulsionnels connue de l'état de la technique.

Une chaîne de détection 10 de signaux impulsionnels non modulés en phase, peut notamment comprendre un amplificateur 11 recevant en entrée un signal radiofréquence, et restituant un signal de type RSSI représentatif de l'intensité du signal reçu. Un module de détection d'impulsion 12 reçoit en entrée le signal de type RSSI. Le module de détection peut comprendre des blocs de filtrage et un bloc d'analyse, opérant par exemple directement sur des signaux analogiques, ou bien mis en oeuvre dans un circuit numérique après conversion des signaux analogiques à traiter par un convertisseur analogique-numérique. Le module de détection d'impulsion 12 peut comprendre des moyens d'analyse de la forme des impulsions, aptes à diagnostiquer la présence ou l'absence de phénomènes d'emmêlement d'impulsions. Par exemple, la présence d'un phénomène d'emmêlement peut être suspectée si l'amplitude du signal correspondant à une impulsion, subit au cours de la durée de l'impulsion détectée, un saut d'amplitude supérieur à un seuil déterminé.

D'une manière typique et en elle-même connue de l'état de la technique, l'amplificateur 11 peut être un amplificateur de type logarithmique. Des amplificateurs logarithmiques sont par exemple disponibles dans le commerce sous la forme de composants électroniques standards, dits COTS, selon le sigle désignant l'expression anglaise "Commercial Off The Shelf". L'amplificateur 11 peut également être mis en oeuvre sous la forme d'un circuit intégré, ainsi que les divers éléments de la chaîne de détection 10. Les amplificateurs logarithmiques comprennent usuellement une sortie de type RSSI, ainsi qu'une sortie dite de type communément désigné "limited", restituant un signal normalisé, c'est-à-dire dont l'amplitude est indépendante de la puissance du signal en entrée du récepteur. La sortie normalisée est habituellement utilisée lorsque l'amplificateur est intégré dans une chaîne de détection de signaux modulés en phase. La sortie normalisée est en revanche inexploitée lorsque l'amplificateur logarithmique est utilisé dans une chaîne de détection de signaux impulsionnels non modulés en phase.

Le principe de la présente invention repose sur l'exploitation du signal restitué par la sortie normalisée d'un amplificateur de type logarithmique, afin d'en extraire des informations de phase du signal d'entrée, par exemple par rapport à un signal périodique de référence. L'information de phase est alors analysée de manière à détecter la présence de phénomènes d'emmêlement d'impulsions, ou bien de compléter le diagnostic de présence ou d'absence d'emmêlement d'impulsions réalisé par le module de détection d'impulsion 12, s'appuyant d'une manière en elle-même connue sur l'analyse de la puissance du signal d'entrée. L'analyse peut par exemple être réalisée dans un module d'analyse non représenté sur la figure, situé en aval du module de détection d'impulsion 12.

La figure 2 présente le schéma de principe d'une chaîne de détection de signaux impulsionnels selon un mode de réalisation de la présente invention.

Une chaîne de détection de signaux impulsionnels 20 comprend par exemple, d'une manière similaire à la chaîne de détection connue décrite ci-dessus en référence à la figure 1, un amplificateur 11 attaqué par le signal radiofréquence d'entrée, un module de détection d'impulsion 12 exploitant la sortie RSSI de l'amplificateur 11, de type amplificateur logarithmique dans l'exemple illustré par la figure. Dans l'exemple de réalisation de l'invention, la sortie normalisée de l'amplificateur 11 est convertie par un convertisseur analogique - numérique 21 ; bien sûr, il est également possible de ne pas recourir à un convertisseur, et d'opérer des traitements analogiques directement sur le signal analogique. Un traitement numérique présente notamment l'avantage de présenter des coûts de développement et de mise au point plus faibles. Le traitement peut par exemple être mis en oeuvre dans des composants à fréquence de fonctionnement rapide, par exemple dans des composants à logique programmable, communément désignés par le terme FPGA désignant l'expression anglaise "Field Programmable Gate Array", ou bien dans des circuits logiques dédiés communément désignés par le terme ASIC. Avantageusement, il est possible de disposer un filtre additionnel, par exemple un filtre numérique en aval du convertisseur numérique - analogique. Ce filtre numérique permet de diminuer la largeur de la bande passante, requise notamment pour assurer la détection des fronts montants des impulsions.

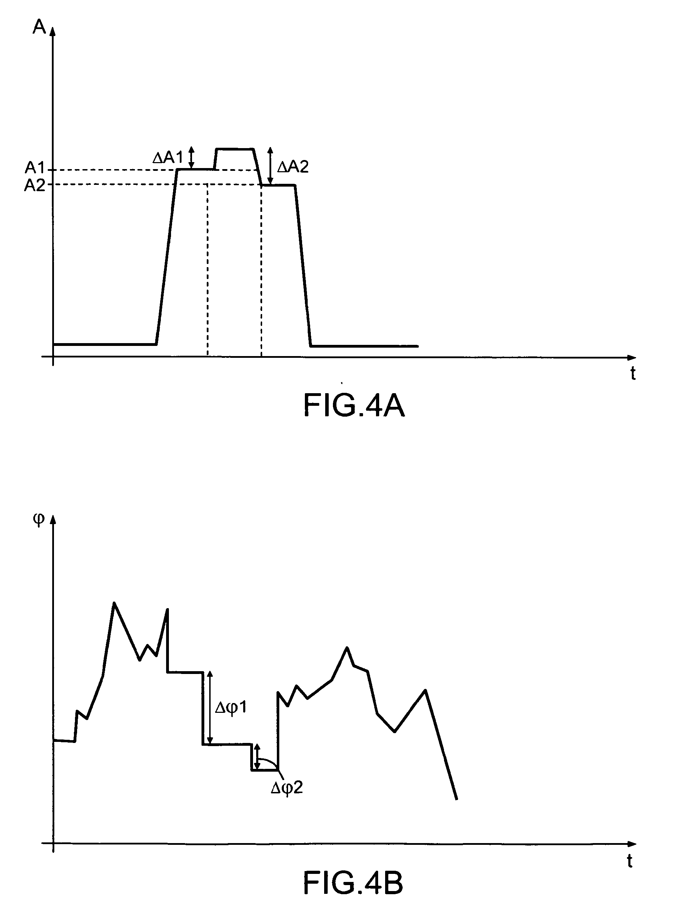

La présente invention propose d'exploiter le signal de la sortie normalisée de l'amplificateur 11, afin d'en extraire une information quant à la phase du signal d'entrée. En effet, ainsi que cela est décrit en détails ci-après en référence à la figure 4, en présence d'un phénomène d'emmêlement d'impulsions, un saut plus ou moins net est visible sur le signal de phase.

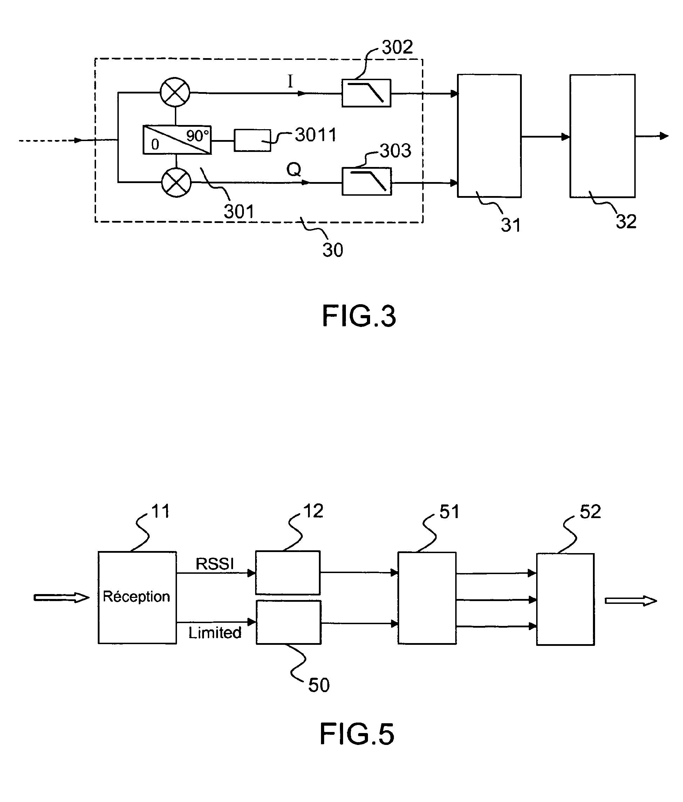

La figure 3 présente le schéma de principe d'une chaîne de traitement associée à un dispositif de détection de signaux impulsionnels, selon un mode de réalisation de l'invention.

Le signal issu de la sortie normalisée de l'amplificateur 11, en référence aux figures 1 et 2, après conversion éventuelle par le convertisseur analogique - numérique 21, peut attaquer l'entrée d'un module de prétraitement 30, suivi d'un module d'estimation de phase 31, suivi d'un module d'analyse 32.

Le module d'estimation de phase 31 permet de restituer une information de phase du signal issu de la sortie normalisée de l'amplificateur, par rapport à un signal de référence. Dans l'exemple illustré par la figure, le module de prétraitement 30 permet la transposition en bande de base du signal issu de la sortie normalisée de l'amplificateur, par une décomposition en composantes en phase (I) et quadrature (Q), via un démodulateur I/Q 301. Le démodulateur I/Q 301 peut notamment comprendre, d'une manière également en elle-même connue, un oscillateur local 3011 délivrant un signal périodique de référence. Chacune des composantes peut être alors filtrée par un filtre passe-bas 302, 303. Les filtres passe-bas 302, 303 permettent de ne conserver que les fréquences correspondant aux signaux utiles attendus. Par exemple, la fréquence d'émission par les transpondeurs fonctionnant dans un des modes précités, est typiquement de 1090 MHz. II est ainsi par exemple possible de concevoir les filtres passe-bas 302, 303 de manière à ce que leur fréquence de coupure soit de l'ordre de 2 à 4 MHz. La transposition en bande de base rend l'estimation de la phase plus aisée. Le filtrage du signal transposé par les filtres passe-bas 302, 303 a également pour effet de permettre la réjection des raies images issues de la transposition I/Q.

Dans l'exemple illustré par la figure 3, le module d'estimation de phase 31 peut par exemple mettre en oeuvre un calcul de l'arc-tangente du rapport entre les composantes en quadrature et en phase : arctan(Q/I).

D'autres méthodes connues d'estimation de la phase peuvent bien sûr également être mises en oeuvre dans un dispositif selon la présente invention. Il est par exemple possible de citer l'utilisation d'une ligne à retard permettant le calcul du produit scalaire de deux échantillons de signaux A et B faiblement espacés, ou encore la mise en oeuvre d'un algorithme dit de Cordic.

Les figures 4a et 4b présentent respectivement une courbe illustrant l'évolution temporelle d'un signal représentatif de l'amplitude du signal reçu par un dispositif de détection, et de la phase du signal reçu, selon un mode de réalisation de l'invention.

Un exemple de variation temporelle d'un signal représentatif de l'amplitude du signal d'entrée est illustré par une première courbe 40 sur la figure 4a. Dans l'exemple illustré par la figure, un phénomène d'emmêlement est causé par la présence de deux impulsions dans le signal reçu. Dans un premier temps, seule une première impulsion en provenance d'une première cible est détectée, l'amplitude du signal reçu est sensiblement égale à une première valeur A1. Dans un deuxième temps, le signal reçu résulte de la présence de deux impulsions en provenance de la première cible et d'une seconde cible. Ainsi l'amplitude du signal reçu subit un premier saut d'une valeur ΔA1. Dans un troisième temps, le signal reçu résulte de la présence de la seconde impulsion seulement, et l'amplitude du signal reçu subit un second saut d'amplitude ΔA2 et devient sensiblement égale à une seconde valeur A2. Des techniques de détection d'emmêlement peuvent par exemple se baser sur une comparaison des valeurs de saut d'amplitude avec des valeurs seuils déterminées. Cependant, dans des cas où les amplitudes A1, A2 détectées en provenance de deux cibles sont proches, et où par exemple les signaux sont en quadrature de phase, les sauts d'amplitude A1, A2 peuvent être très faibles, et ainsi le phénomène d'emmêlement peut ne pas être détecté. Dans un tel cas, un code erroné peut être interprété par la chaîne de détection IFF.

Un exemple de variation temporelle d'un signal représentatif de la phase du signal d'entrée par rapport à un signal périodique de référence, est illustré par une seconde courbe 41 sur la figure 4b. En l'absence d'impulsion détectée, la phase du signal varie de manière aléatoire entre 0 et 2π, le signal ne reflétant alors qu'un niveau aléatoire de bruit. Dans le premier temps, où seule la première impulsion en provenance de la première cible, la phase prend une valeur relativement stable à une valeur de phase donnée. Dans le deuxième temps, dès lors que la seconde impulsion en provenance de la seconde cible est perçue, un premier saut de phase se produit, d'une valeur Δϕ1. Dans le troisième temps, lorsque la première impulsion n'est plus perçue, un second saut de phase se produit, d'une valeur Δϕ2. Il est à noter que moins le phénomène d'emmêlement est perceptible sur le signal d'amplitude, plus celui-ci est perceptible sur le signal de phase. En effet, si l'amplitude du signal résultant des deux signaux impulsionnels est peu sensiblement différente de l'amplitude du signal résultant d'un seul des signaux impulsionnels, cela suppose que le déphasage entre ces signaux est sensiblement élevé. Ainsi, les informations fournies par les signaux d'amplitude et de phase sont complémentaires.

Dans un mode de réalisation de l'invention, il est par exemple possible de détecter la présence d'une impulsion sur la base du signal d'amplitude, et d'initier, à la détection d'une impulsion, une fenêtre temporelle de détection, d'une durée de durée déterminée, par exemple de l'ordre de 500 ns pour des impulsions de signaux de type SIF, dont la largeur est de 450 ns, ou bien s'étendant sur toute la durée de détection de l'impulsion. Durant la fenêtre temporelle de détection, une analyse du signal de phase est opérée, par exemple via le module d'analyse 32 décrit précédemment en figure 3, de manière à détecter un saut de phase d'une valeur supérieure à une valeur seuil prédéterminée. Par exemple, il est possible de procéder à un calcul de la valeur absolue de la différence entre les valeurs de phase, sur la base d'un échantillon considéré à un instant t, et de l'échantillon précédent, et de comparer la valeur résultante à une valeur de seuil.

La figure 5 présente le schéma de principe global d'un dispositif de détection de signaux impulsionnels comprenant une fonction de détection d'emmêlement d'impulsions, selon un mode de réalisation de l'invention.

De façon synoptique, un dispositif de détection peut comprendre l'amplificateur 11 recevant en entrée un signal radiofréquence, l'amplificateur 11 comprenant notamment une sortie RSSI attaquant le module de détection d'impulsion 12, le module de détection d'impulsion 12 étant apte à diagnostiquer sur la base du signal RSSI, la présence d'emmêlement d'impulsions selon une technique en elle-même connue de l'état de la technique, et de restituer un signal représentatif d'une suspicion d'emmêlement d'impulsions, ce signal pouvant par exemple être de type booléen prenant un état logique donné en présence d'un phénomène suspecté d'emmêlement d'impulsions.

L'amplificateur 11 comporte également une sortie normalisée attaquant un module d'estimation de saut de phase 50, comprenant par exemple le module de prétraitement 30, le module d'estimation de phase 31, et le module d'analyse 32, tels que décrits précédemment en référence à la figure 3. Le module d'estimation de saut de phase 50 restitue ainsi en sa sortie, un signal représentatif de la présence d'un phénomène d'emmêlement d'impulsions diagnostiqué à partir du signal de phase, ce signal représentatif étant par exemple également un signal de type booléen. Les sorties respectives du module de détection d'impulsion 12 et du module d'estimation de saut de phase 50 attaquent un module de décodage de réponse 51. En sortie du module de décodage de réponse 51, au moins un signal consolidé représentatif de la présence d'un phénomène d'emmêlement d'impulsions est restitué. Ce signal résulte par exemple d'une opération de type "OU" logique opérée entre le signal représentatif d'une suspicion d'emmêlement d'impulsions, décrit précédemment et résultant de l'analyse réalisée sur le signal RSSI, et le signal représentatif de la présence d'un phénomène d'emmêlement d'impulsions, issu de l'analyse du signal de phase.

Avantageusement, le module de décodage de réponse 51 procède également au décodage des séquences d'impulsions, en recevant en entrée, outre les signaux représentatifs de la présence d'un phénomène d'emmêlement d'impulsions issus du module de détection d'impulsion 12 d'une part et du module d'estimation de saut de phase 50 d'autre part, un signal représentatif de la présence d'une impulsion, restitué par le module de détection d'impulsion 12. De la sorte, le module de décodage de réponse 51 restitue également les informations résultant du décodage des impulsions, ces informations pouvant être assorties du signal consolidé représentatif de la présence d'un phénomène d'emmêlement d'impulsions, restitué également par le module de décodage de réponse 51. Le module de décodage de réponse 51 peut également restituer un signal booléen présentant un état logique déterminé lorsqu'une réponse a été effectivement détectée. L'ensemble de ces données peut alors par exemple être exploité par un module d'association d'échos radar 52 situé en aval, les informations décodées diagnostiquées en présence d'un phénomène d'emmêlement étant par exemple discriminées, ou associées à un niveau de confiance plus large.

## Revendications

1. Dispositif pour radar secondaire de détection de signaux impulsionnels non modulés en phase ou de séquences d'impulsions d'une fréquence déterminée comprenant des moyens de détection d'emmêlement d'impulsions, au moins un amplificateur (11) recevant un signal radiofréquence, et restituant au moins un premier signal (RSSI) représentatif de l'enveloppe du signal d'entrée, et un second signal normalisé, **caractérisé en ce qu'**un module d'estimation de saut de phase (50) comprend des moyens d'estimation de la phase du signal radiofréquence mesurant l'écart de phase entre ledit second signal normalisé et un signal périodique de référence, des moyens pour évaluer un saut de phase, la présence d'emmêlement d'impulsions étant détectée si le saut de phase est d'une valeur supérieure à une valeur seuil déterminée.

2. Dispositif de détection de signaux selon la revendication 1, **caractérisé en ce que** l'amplificateur (11) est un amplificateur logarithmique.

3. Dispositif de détection de signaux selon l'une quelconque des revendications précédentes, **caractérisé en ce que** les moyens d'estimation de la phase du signal radiofréquence sont mis en oeuvre par un module de prétraitement (30) transposant le signal normalisé en bande de base, un démodulateur (301) décomposant le signal normalisé en composantes en phase (I) et quadrature (Q), les composantes étant filtrées par des filtres passe-bas (302, 303) de fréquences de coupure supérieures à la fréquence déterminée des séquences d'impulsions, un module d'estimation de phase (31) déterminant alors la valeur de la phase du signal radiofréquence égale à l'arc-tangente du rapport entre les composantes de quadrature et en phase arctan(Q/I), un module d'analyse (32) détectant la présence d'un saut de phase.

4. Dispositif de détection de signaux selon la revendication 3, **caractérisé en ce que** les module de prétraitement (30), démodulateur (301), filtres passe-bas (302, 303), module d'estimation de phase (31) et module d'analyse (32) réalisent des traitements numériques, après conversion des signaux analogiques par un convertisseur analogique - numérique (21).

5. Dispositif de détection de signaux selon l'une quelconque des revendications 3 et 4, **caractérisé en ce que** le module d'analyse (32) restitue un signal de type booléen représentatif de la présence d'un phénomène d'emmêlement d'impulsions, lorsque la valeur absolue de la différence entre les valeurs de la phase à un instant d'échantillonnage donné, et de la phase à l'instant d'échantillonnage précédent, excède une valeur seuil déterminée.

6. Dispositif de détection de signaux selon la revendication 5, **caractérisé en ce que** le module de détection d'impulsion (12) restitue un signal de type booléen de suspicion d'un phénomène d'emmêlement d'impulsions, un module de décodage de réponse (51) recevant ledit signal de suspicion d'un phénomène d'emmêlement d'impulsions, et le signal de type booléen représentatif de la présence d'un phénomène d'emmêlement d'impulsions issu du module d'analyse (32), et restituant un signal consolidé de type booléen, représentatif de la présence d'un phénomène d'emmêlement d'impulsions, ledit signal consolidé résultant d'une opération logique de type "OU".

7. Dispositif de détection de signaux selon l'une quelconque des revendications précédentes, **caractérisé en ce que** la détection de la présence d'un saut de phase réalisée par le module d'analyse (32), est opérée pendant une fenêtre de durée déterminée débutant de manière simultanée avec le début d'une impulsion détectée par le module de détection d'impulsion (12).

8. Dispositif de détection de signaux selon l'une quelconque des revendications précédentes, **caractérisé en ce que** la détection de la présence d'un saut de phase réalisée par le module d'analyse (32), est opérée pendant la durée de détection d'une impulsion par le module de détection d'impulsion (12).

9. Dispositif de détection de signaux selon l'une quelconque des revendications 6 à 8, **caractérisé en ce que** le module de décodage de réponse (51) reçoit également un signal représentatif de la présence d'impulsion, délivré par le module de détection d'impulsion (12), et procède au décodage des séquences d'impulsions reçues, le module de décodage de réponse (51) restituant au moins ledit signal consolidé de type booléen, représentatif de la présence d'un phénomène d'emmêlement d'impulsions, et les informations issues du décodage des séquences d'impulsions, l'ensemble des signaux étant appliqués en entrée d'un module d'association (52) discriminant les informations décodées associées à un phénomène d'emmêlement d'impulsions diagnostiqué par le module de décodage de réponse (51).

10. Dispositif de détection de signaux selon l'une quelconque des revendications 6 à 8, **caractérisé en ce que** le module de décodage de réponse (51) reçoit également un signal représentatif de la présence d'impulsion, délivré par le module de détection d'impulsion (12), et procède au décodage des séquences d'impulsions reçues, le module de décodage de réponse (51) restituant au moins ledit signal consolidé de type booléen, représentatif de la présence d'un phénomène d'emmêlement d'impulsions, et les informations issues du décodage des séquences d'impulsions, l'ensemble des signaux étant appliqués en entrée d'un module d'association (52) attribuant aux informations décodées associées à un phénomène d'emmêlement d'impulsions diagnostiqué par le module de décodage de réponse (51), un niveau de confiance supérieur à une valeur déterminée.

## Patentansprüche

1. Vorrichtung für ein sekundäres Radar zum Erkennen von nicht phasemnodulierten Impulssignalen oder Impulssequenzen einer bestimmten Frequenz, die Mittel zum Erkennen von Impulsverstümmelungen, wenigstens einen Verstärker (11), der ein Radiofrequenzsignal empfängt, und zum Wiederherstellen von wenigstens einem die Hüllkurve des Eingangssignals repräsentierenden ersten Signal (RSSI), und ein zweites normalisiertes Signal umfasst, **dadurch gekennzeichnet, dass** ein Phasensprungschätzmodul (50) Mittel zum Schätzen der Phase des Radiofrequenzsignals, das die Phasenabweichung zwischen dem zweiten normalisierten Signal einem periodischen Referenzsignal misst, und Mittel zum Beurteilen eines Phasensprungs umfasst, wobei die Anwesenheit von Impulsverstümmelung dann erkannt wird, wenn der Wert des Phasensprung größer ist als ein vorbestimmter Schwellenwert.

2. Vorrichtung zum Erkennen von Signalen nach Anspruch 1, **dadurch gekennzeichnet, dass** der Verstärker (11) ein logarithmischer Verstärker ist.

3. Vorrichtung zum Erkennen von Signalen nach einem der vorherigen Ansprüche, **dadurch gekennzeichnet, dass** die Mittel zum Schätzen der Phase des Radiofrequenzsignals durch ein Vorverarbeitungsmodul (30) implementiert werden, das das normalisierte Signal auf Basisband transponiert, wobei ein Demodulator (301) das normalisierte Signal in phasengleiche (I) und um 90° phasenverschobene (Q) Komponenten zerlegt, wobei die Komponenten mit Tiefpassfiltern (302, 303) mit Grenzfrequenzen gefiltert werden, die höher sind als die bestimmte Frequenz der Impulssequenzen, wobei ein Phasenschätzmodul (31) dann den Wert der Phase des Radiofrequenzsignals ermittelt, der gleich der Bogentangente des Verhältnisses zwischen den um 90° verschobenen und phasengleichen Komponenten Arctan (Q/I) ist, wobei ein Analysemodul (32) die Anwesenheit eines Phasensprungs erkennt.

4. Vorrichtung zum Erkennen von Signalen nach Anspruch 3, **dadurch gekennzeichnet, dass** das Vorverarbeitungsmodul (30), der Demodulator (301), die Tiefpassfilter (302, 303), das Phasenschätzmodul (31) und das Analysemodul (32) digitale Verarbeitung nach dem Umwandeln von analogen Signalen durch einen Analog-Digital-Wandler (21) durchführen.

5. Vorrichtung zum Erkennen von Signalen nach einem der Ansprüche 3 und 4, **dadurch gekennzeichnet, dass** das Analysemodul (32) ein Signal des booleschen Typs wiederherstellt, das die Anwesenheit eines Impulsverstümmelungsphänomens repräsentiert, wenn der Wert der Differenz zwischen den Werten der Phase zu einem gegebenen Abtastmoment dass der Phase am vorhergehenden Abtastmoment einen bestimmten Schwellenwert übersteigt.

6. Vorrichtung zum Erkennen von Signalen nach Anspruch 5, **dadurch gekennzeichnet, dass** das Impulserkennungsmodul (12) ein Signal des booleschen Typs wiederherstellt, bei dem ein Impulsverstümmelungsphänomen vermutet wird, wobei ein Antwortdecodiermodul (51) das Signal, bei dem ein Impulsverstümmelungsphänomen vermutet wird, und das Signal des booleschen Typs empfängt, das die Anwesenheit eines vom Analysemodul (32) kommenden Impulsverstümmelungsphänomens repräsentiert, und ein konsolidiertes Signal des booleschen Typs wiederherstellt, das die Anwesenheit eines Impulsverstümmelungsphänomens repräsentiert, wobei das konsolidierte Signal von einem Logikvorgang des ,,ODER"-Typs resultiert.

7. Vorrichtung zum Erkennen von Signalen nach einem der vorherigen Ansprüche, **dadurch gekennzeichnet, dass** die vom Analysemodul (32) durchgeführte Erkennung der Anwesenheit eines Phasensprungs während eines Fensters einer vorbestimmten Dauer erfolgt, die gleichzeitig mit dem Start eines Impulses beginnt, der von dem Impulserkennungsmodul (12) erkannt wird.

8. Vorrichtung zum Erkennen von Signalen nach einem der vorherigen Ansprüche, **dadurch gekennzeichnet, dass** die vom Analysemodul (32) durchgeführte Erkennung der Anwesenheit eines Phasensprungs während der Dauer des Erkennens eines Impulses durch das Impulserkennungsmodul (12) erfolgt.

9. Vorrichtung zum Erkennen von Signalen nach einem der Ansprüche 6 bis 8, **dadurch gekennzeichnet, dass** das Antwortdecodiermodul (51) auch ein Signal empfängt, das die Anwesenheit eines vom Impulserkennungsmodul (12) zugeführten Impulses repräsentiert, und die Sequenzen von empfangenen Impulsen decodiert, wobei das Antwortdecodiermodul (51) wenigstens das konsolidierte Signal des booleschen Typs, das die Anwesenheit eines Impulsverstümmelungsphänomens repräsentiert, und die vom Decodieren der Impulssequenzen kommenden Informationen wiederherstellt, wobei der Satz von Signalen als Eingang an ein Assoziationsmodul (52) angelegt wird, das die decodierten Informationen unterscheidet, die mit einem Impulsverstümmelungsphänomen assoziiert sind, das von dem Antwortdecodiermodul (51) diagnostiziert wird.

10. Vorrichtung zum Erkennen von Signalen nach einem der Ansprüche 6 bis 8, **dadurch gekennzeichnet, dass** das Antwortdecodiermodul (51) ferner ein Signal empfängt, das die Anwesenheit eines vom Impulserkennungsmodul (12) zugeführten Impulses repräsentiert, und die Sequenzen von empfangenen Impulsen decodiert, wobei das Antwortdecodiermodul (51) wenigstens das konsolidierte Signal des booleschen Typs, das die Anwesenheit eines Impulsverstümmelungsphänomens repräsentiert, und die vom Decodierten der Impulssequenzen kommenden Informationen wiederherstellt, wobei der Satz von Signalen als Eingang in ein Assoziationsmodul (52) angelegt wird, das den decodierten Informationen, die mit einem von dem Antwortdecodiermodul (51) diagnostizierten Impulsverstümmelungsphänomen assoziiert sind, einen Grad an Konfidenz zuordnet, der höher ist als ein vorbestimmter Werft.

## Claims

1. A device for a secondly radar for detecting pulsed signals that are not phase modulated or pulse sequences of a determined frequency, comprising means for detecting tangling of pulses, at least one amplifier (11) receiving a radiofrequency signal, and for restoring at least one first signal (RSSI) that represents the envelope of the input signal and a second normalised signal, **characterised in that** a phase hop estimation module (50) comprises means for estimating the phase of the radiofrequency signal measuring the phase deviation between said second normalised signal and a periodic reference signal and means for assessing a phase hop, the presence of tangling of pulses being detected if the value of the phase hop is greater than a determined threshold value.

2. The device for detecting signals according to claim 1, **characterised in that** said amplifier (11) is a logarithmic amplifier.

3. The device for detecting signals according to any one of the preceding claims, **characterised in that** said means for estimating the phase of the radiofrequency signal are implemented by a pre-processing module (30) transposing the normalised signal into baseband, with a demodulator (301) breaking down the normalised signal into in-phase (I) and quadrature (Q) components, said components being filtered by low-pass filters (302, 303) with cut-off frequencies that are greater than the determined frequency of empfängt, pulse sequences, with a phase estimation module (31) then determining the value of empfängt, phase of the radiofrequency signal that is equal to empfängt, arc tangent of the ratio between said quadrature and phase components, arctan (Q/I), and an analysis module (32) detecting the presence of a phase hop.

4. The device for detecting signals according to claim 3, **characterised in that** empfängt, pre-processing module (30), demodulator (301), low-pass filters (302, 303), phase estimation module (31) and analysis module (32) carry out digital rocessing, after the conversion of analogue signals by an analogue-digital converter (21).

5. The device for detecting signals according to any one of claims 3 and 4, **characterised in that** said analysis module (32) restores a signal of the Boolean type that represents the the presence of a pulse tangling phenomenon when empfängt, absolute value of the difference between the values of the phase at a given sampling instant and of empfängt, phase at the preceding sampling instant exceeds a determined threshold value.

6. The device for detecting signals according to claim 5, **characterised in that** the pulse detection module (12) restores a signal of the Boolean type suspected of having a pulse garbling phenomenon, a response decoding module (51) receiving said signal suspected of having a pulse tangling phenomenon and the signal of empfängt, Boolean type that represents the presence of a pulse tangling phenomenon coming from said analysis module (32) and restoring a consolidated signal of the Boolean type that represents the the presence of a pulse tangling phenomenon, said consolidated signal resulting from a logic operation of the "OR" type.

7. The device for detecting signals according to any one of the preceding claims, **characterised in that** the detection of empfängt, presence of a phase hop that is carried out by said analysis module (32) is carried out during a window of determined duration that starts simultaneously with the start of a pulse that is detected by said pulse détection module (12).

8. The device for detecting signals according to any one of the preceding claims, **characterised in** the detection of the presence of a phase hop that is carried out by said analysis module (32) is carried out during the duration for detecting a pulse by empfängt, pulse decoding module (12).

9. The device for detecting signals according to any one of claims 6 to 8, **characterised in that** said response decoding module (51) further receives a signal that represents the the presence of a pulse that is delivered by said pulse detection module (12) and decodes the sequences of received pulses, the response decoding module (51) restoring at least said consolidated signal of the Boolean type that represents the the presence of a pulse tangling phenomenon and empfängt, information coming from the decoding of the pulse sequences, the set of signals being applied as input to an association module (52) that discriminates the decoded information that is associated with a pulse tangling phenomenon that is diagnosed by said response decoding module (51).

10. The device for detecting signals according to any one of claims 6 to 8, **characterised in that** the response decoding module (51) further receives a signal that represents the the presence of a pulse that is delivered by empfängt, pulse detection module (12) and decodes the sequences of received pulses, the response decoding module (51) restoring at least said consolidated signal of empfängt, Boolean type that represents the the presence of a pulse tangling phenomenon and the information coming from the decoding of the pulse sequences, the set of signals being applied as input to an association module (52) that assigns a level of confidence that is greater than a determined value to the decoded information that is associated with a pulse tangling phenomenon that is diagnosed by said response decoding module (51).
